Europäisches Patentamt

**European Patent Office**

Office européen des brevets

(19)

(11) Publication number: **0 029 129**
A1

(12)

# EUROPEAN PATENT APPLICATION

(21) Application number: **80106444.5**

(22) Date of filing: **22.10.80**

(51) Int. Cl.³: **F 16 K 31/00, G 05 D 23/02**

(30) Priority: **13.11.79 US 93704**

(43) Date of publication of application: **27.05.81**
**Bulletin 81/21**

(84) Designated Contracting States: **DE FR GB IT SE**

(71) Applicant: **EATON CORPORATION, 100 Erieview Plaza,**
**Cleveland Ohio 44114 (US)**

(72) Inventor: **Maltby, Edgar William, 1010 Lawrence, Elgin,**
**Illinois 60120 (US)**

(74) Representative: **Wagner, Karl H., P.O.**
**Box 246 Gewuerzmuehlstrasse 5,**
**D-8000 München 22 (DE)**

(54) **Two-port thermally responsive valve.**

(57) A thermally responsive valve (10) for valving adjacent first (20) and second (22) fluid ports is disclosed which prevents harmful fuel vapors from adversely affecting the valve power element (12). An elongated valve member (82) is movably contained within a housing fluid chamber (18) and spring-biased toward a closed position whereupon a first seal ring (96) located around the valve member engages with a valve seating surface (70) located intermediate the two fluid ports. When predetermined temperatures are encountered, a thermally responsive power element (12) connected to the lower end of the valve housing overcomes the biasing force of the spring (92) and moves the valve member to an open position in which the valve surface is spaced from the valve seat, thereby permitting fluid communication between the two ports. A lower portion (90) of the valve member extends beyond the fluid chamber and abuts with an output rod (60) of the power element. A stationary seal ring (72) is mounted in a housing counterbore (76) and engages the periphery of the valve member lower portion for sealing the fluid chamber from the thermal power element.

EP 0 029 129 A1

# TWO-PORT THERMALLY RESPONSIVE VALVE

## BACKGROUND OF THE INVENTION
## FIELD OF THE INVENTION

This invention relates to thermally responsive valves for use in pollution control systems for automotive internal combustion engines and is particularly suited for controlling the flow of stored fuel vapors from the engine fuel tank to the intake manifold.

## DISCUSSION OF THE PRIOR ART

Evaporator cannisters are presently being used to collect fuel vapors given off by the fuel in the vehicle fuel tank to prevent this form of pollution from entering the atmosphere. The evaporator cannister is one component of a fuel vapor recovery system which in some installations includes a solenoid valve for controlling vapor flow from the cannister to the engine intake manifold. The solenoid valve is opened a predetermined time after engine start-up in order to avoid introducing an excessively rich air-fuel mixture to the engine which causes poor engine performance. Although the solenoid valve type arrangement has been found functionally operative, it has long been desired to find a lower cost alternative to replace the solenoid valve and its associated control circuitry.

As an alternative to the electrically operated solenoid valve other known systems have incorporated a two port vacuum valve actuated by a suitable vacuum signal or a two port valve actuated by a thermally expansible wax-type power element. The performance of these valves upon exposure to prolonged service has been adversely affected by the degrading effects of the fuel vapors on the diaphragms and wax-type power elements.

## SUMMARY OF THE INVENTION

In the present invention a thermally responsive two port pneumatic valve is provided which is resistant to the harmful effects of fuel vapors and which represents a significant cost savings over a conventional solenoid valve and its associated control circuitry. The present valve employs a unique valve member construction and sealing arrangement in the valve housing. The valve member has an elongated configuration with an upper portion extending into a fluid chamber defined by the valve housing and includes a flanged portion intermediate the two fluid ports which communicate with the fluid chamber. A unique seal ring mounting arrangement on the valve member includes an annular groove having an upper side wall formed by the lower surface of a flanged portion and a lower side wall having a reduced outer diameter. The groove depth is sufficient to retain an annular seal ring on the valve member yet shallow enough to permit the ring to seat against a valve seating surface defined by a shoulder extending inward radially beneath portions of the seal ring. The shoulder is integrally molded into the valve housing and disposed intermediate the two fluid ports. A downwardly converging conical portion is formed on the valve member and has a major diameter defined by and in common with the outer diameter of the groove lower side wall. This structural feature enables the effective flow area between the conical valve member portion and the internal wall of the fluid chamber beneath the valve seat to increase abruptly for a relatively small amount of axial valve member movement. The lower end of the valve member includes a portion having a reduced diameter which extends externally of the fluid chamber and into engagement with an output rod from the thermally responsive actuator.

A second seal ring is mounted in a bore in the housing exteriorly of the fluid chamber and held against a housing shoulder by a retaining washer. The second ring sealingly engages the outer surface of the reduced diameter portion of the valve member thereby fluidly sealing the valve chamber and preventing fuel vapors passing through the valve from escaping into the wax-base expansible material of the power element attached to the lower end of the valve assembly.

It is therefore an object of the invention to provide a thermally responsive valve which isolates harmful fuel vapors from the power element.

It is an object of the invention to provide a thermally responsive valve which is easy to assemble and low in cost.

It is an object of the invention to provide a low cost means for sealing a movable valve member within a fluid chamber adapted to be exposed to harmful fuel vapors.

It is another object of the invention to provide a valve having increasing transverse flow area past the movable valve member as the valve member is actuated to an open position.

These and other objects, features, and advantages of the present invention will be understood in greater detail from the following description and associated drawings.

## BRIEF DESCRIPTION OF THE DRAWINGS

Fig. 1 is a plan view of a valve embodying the principles of the invention;

Fig. 2 is a cross-sectional view of the valve of Fig. 1 in the closed position; and

Fig. 3 is a cross-sectional view similar to Fig. 2 illustrating the valve in the open position.

## DETAILED DESCRIPTION

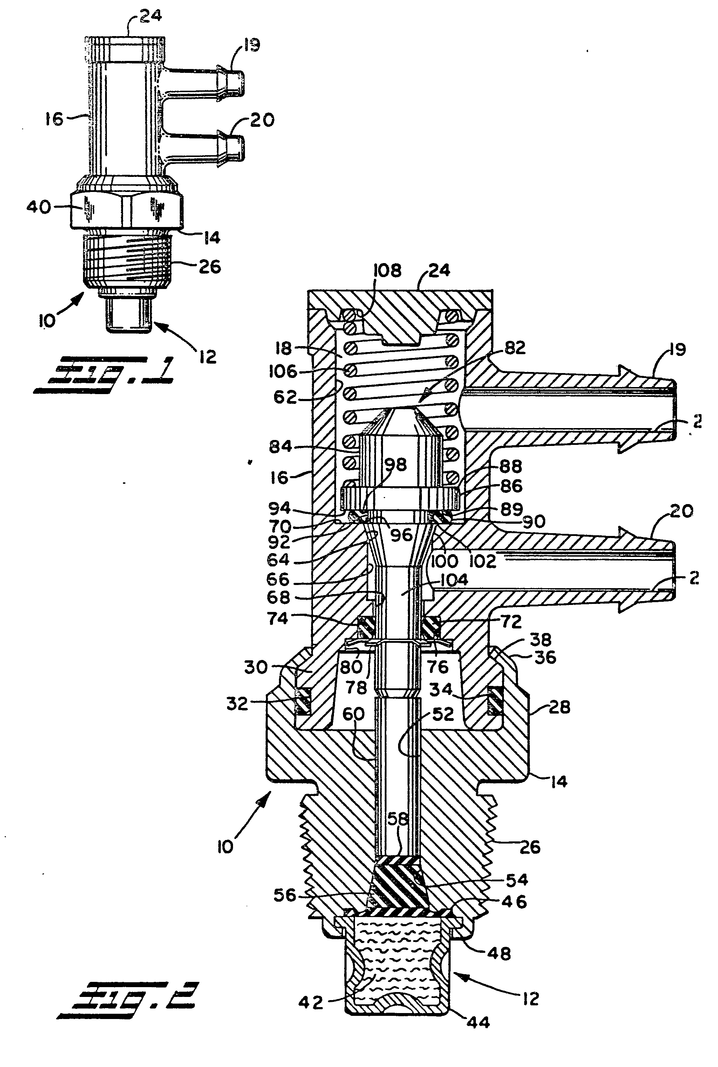

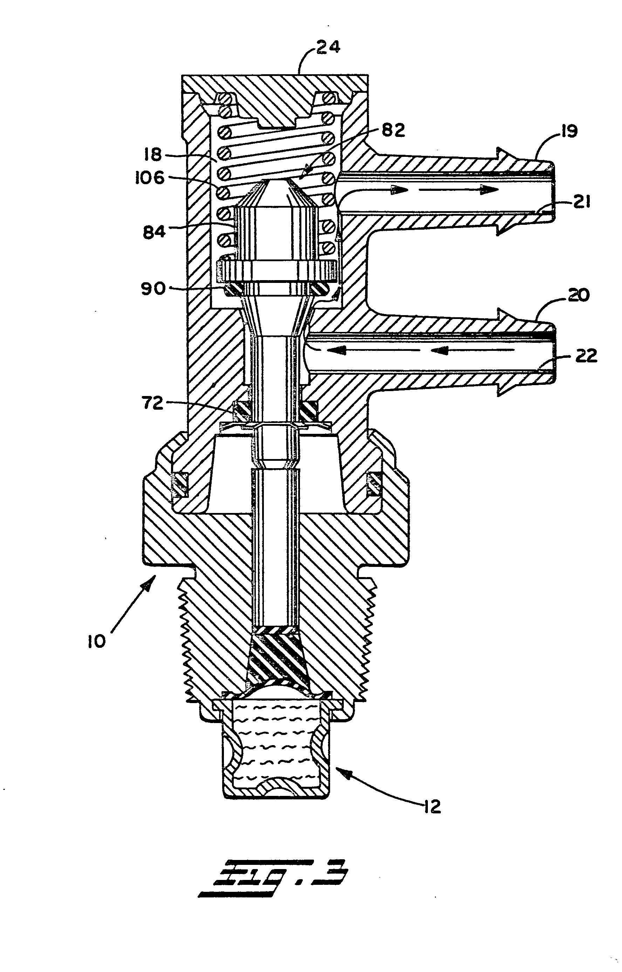

Referring to Figs. 1 and Fig. 2, a thermally responsive vacuum valve, indicated generally by numeral 10, is shown as having a thermally responsive actuator, indicated generally by numeral 12, extending from an adapter 14. A housing 16 defines an internal fluid chamber 18. Upper and lower tubular projections 19 and 20 are integrally molded with housing 16. Fluid ports 21 and 22 are formed in projections 19 and 20, respectively, and are in fluid communication with chamber 18. A disc shaped end cap 24 is seated on the upper end of housing 16 and closes off the upper end of chamber 18. In the presently preferred practice, housing 16 and end cap 24 are preferably injection molded from a suitable reinforced plastic material, such as a glass filled nylon, and are joined together and sealed against fluid leakage by any suitable means, as for example, sonic welding.

Adapter 14 has a tapered pipe thread 26 at one end and is attached to the bottom end of housing section 16 for permitting assembly of the valve to the apparatus from which a medium is to be sensed as, for example, on an engine block for sensing the temperature of the engine coolant. Housing 16 is free to rotate relative to the adapter 14 thereby permitting alignment of the fluid ports after installation to any desired position.

A relatively thin wall tubular projection 28 is formed on the upper end of the adapter 14 and has located and received therein the lower end of housing section 16. A thickened cylindrical wall portion 30 is formed on the lower end of the housing 16 and has an annular groove 32 formed therein in which is received a seal ring 34. Seal ring 34 provides a dynamic seal between adapter 14 and housing 16. An upper portion 36 of tubular projection 28 has a wall thickness suitable for crimping. A tapered surface 38 is provided on housing 16. Upper portion 36 is crimped over surface 38 an amount sufficient to locate and retain the housing in the adapter, but still allow relative rotation therebetween. The upper exterior surface of adapter 14 is provided with a hexagonal pattern of wrench flats 40 to facilitate valve installation.

Thermally responsive actuator 12 includes a volumetrically thermally responsive material 42 disposed within a retaining cup 44 which is preferably formed from mild steel and attached to the lower end of adapter 14. Material 42 is of any suitable type well known in the art

5 0029129

as, for example, a mixture of wax and copper metallic flakes. The mixture is enclosed in the cup by a flexible, elastomeric diaphragm 46. A thin walled annular portion 48 is formed on the lower end of adapter 14 and is deformed over a flange 50 provided on the periphery of retaining cup 44. The holding force of the crimped portion 48 seals disphragm 46 against the top surface of the retaining cup and the lower face of the adapter, thus confining the wax mixture 42.

Adapter 14 may be fabricated from steel or other suitable material as, for example, brass, and has a centrally located bore 52 located therethrough and a tapered counterbore 54 located at the lower end of the adapter. A plug 56 conformes generally to the space defined by tapered counterbore 54 and is received therein. A disc-shaped spacer 58 is received in bore 54 and registers against the upper surface of plug 56. Diaphragm 46, plug 54, and spacer 58 are all formed from a suitable elastomer which is compatible with the wax-metal flake mixture and suitable for service exposure to the temperatures encountered during engine cooling system operating conditions.

A rod 60, preferably fabricated from aluminum, is slidably received within bore 52 and has a lower end in contact with spacer 58 and an upper end extending into housing 16.

Fluid chamber 18 is defined in part by adjacent bores 62, 64, 66, and 68. A shoulder 70 connects bore 62 and bore 64, which is tapered, and is also designated as a valve seat.

A seal ring 72 is seated against a shoulder 74 which connects bore 68 with a counterbore 76. A resilient retaining clip 78 maintains seal ring 72 against shoulder 74. The outer diameter of the retaining clip as measured across the outer diameter of its radially extending legs exceeds the internal diameter of a counterbore 80 located immediately below counterbore 76, thus allowing the leg tips to "bite" into the softer plastic housing surface.

A valve member, indicated generally by reference numeral 82, is received in fluid chamber 18 and includes an enlarged upper diameter portion 84, and a flanged portion 86 which has an upper transverse seating face 88 and a lower transverse surface 89.

A seal ring 90 is mounted in an annular groove 92 and is movable with valve member 82. Groove 92 is defined by an upper transverse wall 94, a lower transverse wall 96, and a cylindrical surface 98 connecting walls 94 and 96. By sizing the outer diameter of wall 96 to achieve a shallow groove depth, the lower surface of seal ring 90 is made to sealingly and positively abut shoulder 70 thereby fluidly isolating fluid port 21 from fluid port 22 while the valve member 82 is in the closed position as shown by Fig. 2.

Valve member 82 includes a conical surface portion 100 having an upper major diameter 102 defined by the outer diameter of lower transverse wall 96 and a lower minor diameter portion 104. The reduced minor diameter surface portion 104 extends past the lower portion of fluid chamber 18 and sealingly engages with internal surface portions of seal ring 72. A central opening (not shown) in retaining clip 78 allows portion 104 to extend therethrough. The lower end of valve member 82 is maintained in abutment with the upper end of rod 60 by a compression biasing spring 106 which has its upper end received in an annular centering groove 108 formed in the lower surface of end cap 24 and its lower end seated against seating surface 88 of flange 86. Outer diameter portion 84 assists in centering spring 92 on the valve member.

In operation, at sensed temperatures less than a predetermined minimum value valve member 82 is biased downwardly relative to Fig. 2 by spring 106 to a closed position, wherein seal ring 90 is compressed between the lower flange surface 94 and shoulder 70, thereby fluidly isolating upper fluid port 21 from lower fluid port 22. Seal ring 72 fluidly isolates the lower portion of chamber 18 defined by bores 64, 66, and 68 from the internal space between adapter 14 and lower surface of housing 16. While the valve member is in the closed position, the thermally responsive actuator 12 is inactive since the temperatures sensed are below those necessary to cause an abrupt volumetric increase in the wax and metal flake mixture 42.

Referring now to Fig. 3, valve 10 is shown in the open position with valve member 82 moved upwardly by the thermally responsive actuator 12 which is sensing temperatures above the value which results in an abrupt volumetric increase of the wax and copper flake mixture 42. Valve member 82 has now moved upward an amount sufficient to space seal ring 90 from valve seat 70, thereby permitting fluid communication between upper fluid port 21 and lower fluid port 22 by way of fluid chamber 18. Fluid communication between ports 22 and 21 follows the path indicated generally by the black arrows of Fig. 3.

It should be noted that as valve member 82 moves upwardly, the effective flow area between housing tapered bore 64 and tapered conical portion 100 of valve member 82 increases an amount proportional to valve member travel, whereas cylindrical surfaces at that location would not provide this feature.

Seal ring 72 continues to function as an isolating means for preventing harmful vapors from escaping fluid chamber 18 and penetrating into the area around thermal actuator 12 by flowing past the clearance between rod 60 and bore 52 and also past diaphragm 46, plug 56 and spacer 58.

When sensed temperatures are again below the predetermined range, the volume of the mixture 42 will contract permitting the spring 106 to return valve member 82 to the closed position as shown in Fig. 2, thereby once again isolating upper fluid port 21 from lower fluid port 22.

0029129

The embodiment of the invention as shown and described above is representative of the inventive principles stated therein. It is to be understood that variations and departures can be made from the embodiments as shown without, however, departing from the scope of the appended claims.

WHAT IS CLAIMED IS:

Claim 1. A thermally responsive device for valving a plurality of fluid ports, said device comprising:

(a) housing means, said housing means including structure defining

(i) a first fluid port,

(ii) a second fluid port,

(iii) a fluid chamber in fluid communication with said first and second fluid ports,

(iv) valve seat means disposed within said fluid chamber intermediate said first and second fluid ports,

(b) valve means, said valve means including a valve member movably disposed within said housing means and having

(i) a first portion disposed within said fluid chamber, said first portion defining a valve surface engageable with said valve seat,

(ii) a second portion extending exteriorly of said fluid chamber,

(iii) said valve member being movable between a closed position in which said valve surface is seated against said valve seat for isolating said first port from said second port and an open position in which said valve surface is spaced from said valve seat for fluidly communicating said first and second ports through said fluid chamber;

(c) means biasing said valve member to said first position;

(d) means fluidly isolating said second portion from said fluid chamber as said member moves between said closed and open positions; and,

(e) thermally responsive means associated with said housing means and including means operable for moving said valve member from said first to said second position in response to experiencing predetermined temperatures.

Claim 2. The device as defined in claim 1, wherein said isolating means includes a seal ring having surface portions thereof engaging said housing means and said valve member second portion.

Claim 3. The device as defined in claim 1, wherein

(a) said valve member first portion has an annular groove formed therein, said groove defined by an upper transverse wall portion, a lower transverse wall portion, and a cylindrical surface portion connecting said upper and lower wall portions;

(b) said valve surface means includes a seal ring received in said annular groove, said seal ring having a radial thickness substantially greater than the radial thickness of said lower transverse wall; and

(c) said valve seat means includes an annular shoulder extending inward radially beneath portions of said seal ring such that in said closed position said seal ring sealingly abuts thereagainst.

Claim 4. The device as defined in claim 3, wherein said valve member first portion includes a tapering surface portion, said tapering portion having a major diameter defined by the outer edge of said lower transverse wall portion, and a minor diameter in common with said second portion.

Claim 5. The device as defined in claim 1, wherein said isolating means includes,

(a) said housing means defining a bore through which said valve member second portion extends;

(b) an annular recess disposed about the inner periphery of said bore;

(c) a seal ring disposed in sealing engagement with said recess ; and

(d)  retaining means disposed within said housing means and engaging portions of the structure thereof for maintaining said seal ring in said counterbore.

FIG.1

FIG.2

Fig.3

European Patent Office

**EUROPEAN SEARCH REPORT**

0029129

Application number

EP 80 10 6444

| Category | Citation of document with indication, where appropriate, of relevant passages | Relevant to claim |
|---|---|---|
| | **FR - A - 2 218 523** (FIRMA GASTAV WAHLER)<br><br>* Page 1, lines 1-22; page 2, line 36 to page 3, line 14; page 8, line 8 to page 10, line 34; figures 1-3 *<br><br>-- | 1 |
| | **US - A - 4 128 203** (E. MALTBY)<br><br>* Abstract; Column 4, lines 9-27; column 4, line 61 to column 5, line 6; column 5, lines 39-48; figure 2 *<br><br>-- | 1-5 |
| | **US - A - 3 961 606** (B. WONG)<br><br>* Abstract.; column 2, line 67 to column 3, line 8; figure 1 *<br><br>-- | 3 |
| A | **FR - A - 2 113 125** (VERNAY)<br><br>* Page 1, lines 1-10; page 3, line 24 to page 4, line 22; figure 2 *<br><br>---- | 1 |

**DOCUMENTS CONSIDERED TO BE RELEVANT**

**CLASSIFICATION OF THE APPLICATION** (Int. Cl.³)

F 16 K 31/00
G 05 D 23/02

**TECHNICAL FIELDS SEARCHED** (Int. Cl.³)

F 16 K 31/00
G 05 D 23/02
G 05 D 23/185

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-02-1981 | HELOT |

EPO Form 1503.1  06.78